# EUROPEAN PATENT SPECIFICATION

(11) **EP 1 592 268 B1**
(45) Date of publication and mention of the grant of the patent: **28.02.2007**
(21) Application number: 04291112.3
(22) Date of filing: 28.04.2004
(51) Int. Cl.: H04Q 7/30, H04L 12/28

(54) **Establishing a connection between a base station and a central office**
Aufbau einer Verbindung zwischen einer Basisstation und einer zentralen Vermittlung
Etablissement d'une connexion entre une station de base et un central téléphonique

(43) Date of publication of application: 02.11.2005
(73) Proprietor: ALCATEL, 75008 Paris (FR)
(72) Inventor: Halbauer, Hardy, 76275 Ettlingen (DE); Krimmel, Heinz, 70825 Korntal-Münchingen (DE); Karaghiosian, Michel, 75008 Paris (FR); Balech, Jean-Pierre, 92160 Antony (FR); Peruyero, Michel, 78141 Velizy (FR)
(74) Representative: Rausch, Gabriele

(56) References cited:
- EP-A- 0 851 698
- WO-A-00/72625
- WO-A-03/058984
- US-B1- 6 487 423
- US-B1- 6 490 256

## Description

### Specification

The invention relates to a method of operating a communication system according to the preamble of claim 1. The invention also relates to a communication system according to the preamble of claim 4 and to a base station for a communication system according to the preamble of claim 9. Such communication system is known from EP-A-851-698.

The communication link between the base station and the central office serves to connect the base station and therefore the terminal stations to a core network. This communication link is known as backhaul connection. It is known to implement this communication link via a cable or a fiber. As well, it is known to connect the base station and the central office via a further point-to-point radio link operating with frequencies different from the frequencies of the point-to-multipoint communication provided by the base station.

The required efforts and costs for the known backhaul connections are high. In particular in areas with low-density communication traffic, these costs can only be shared among a low number of subscribers what leads to increased costs per subscriber.

It is an object of the invention to provide a method of operating a communication system with a less expensive backhaul connection.

The invention solves this object by the method of claim 1. The object is also solved by the communication system of claim 4 and by the base station of claim 9.

The invention, therefore, only requires little efforts or costs to establish the communication link between the central office and the base station. The invention uses the point-to-multipoint communication that is provided by the base station and that is already present in order to implement the communication link between the central office and the base station. For this use, it is only necessary to adapt the operating procedures of the base station and the central office.

In embodiments of the invention, the base station sends data received by the base station from one of the terminal stations, to the central office via the point-to-multipoint communication provided by the base station, and the base station receives data addressed to one of the terminal stations from the central office via the point-to-multipoint communication provided by the base station.

In further embodiments of the invention, the base station comprises a beam forming antenna, in particular a smart antenna, for concentrating the beam of the antenna in the direction of the central office, and/or the central office comprises a directional antenna being directed in the direction of the base station. With these measures, the distance between the central office and the base station may be increased.

Further features, applications and advantages of the invention will become apparent from the following description of exemplary embodiments of the invention that are shown in the drawings. There, all described and shown features themselves or in any combination represent the subject matter of the invention, independently of their wording in the description or their representation in the drawings and independently of their combination in the claims or the dependencies of the claims.

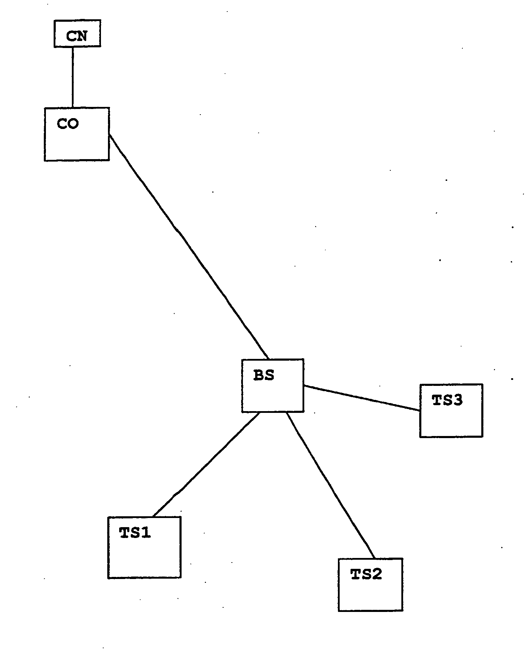

The only figure of the drawings shows a schematic block diagram of an embodiment of a communication system according to the invention.

In the figure, a base station BS and a number of terminal stations TS1, TS2, TS3 are shown.

The base station BS is located at a fixed location and serves as a point-to-multipoint radio receiver/transmitter. A cell or sector is defined around the base station BS in which terminal stations may communicate with the base station BS. The terminal stations TS1, TS2, TS3 shown in the figure, are situated within this cell or sector.

The terminal stations TS1, TS2, TS3 are fixed or mobile receivers/transmitters and are established as subscribers for communicating with the base station BS.

The base station BS is coupled to a core network CN via a central office CO. This connection is usually called a backhaul connection.

According to the invention, the central office CO is established as a further subscriber of the base station BS and is realized as a kind of terminal station. The properties of the central office CO and the properties of the terminal stations TS1, TS2, TS3 are the same with regard to an uplink transmission or to a downlink transmission. For that purpose, the central office CO may comprise a subscriber station that is similar to the terminal stations TS1, TS2, TS3.

If, for example, the terminal station TS2 wants to send data to a receiver being located somewhere within the core network CN, the terminal station TS2 transmits this data to the base station BS. In this upstream transmission, the address of the base station BS is used as the actual address of the data.

The base station BS receives the data and admits the data due to the actual address of the data. The base station BS assigns the address of the central office CO as the actual address of the data. Then, the base station BS transmits the data in a downlink transmission together with the assigned actual address.

The central office CO receives the data and admits the data due to the assigned actual address of the data. Then, the central office CO processes the data and forwards the data to the core network CN for further transmission.

The same procedure is carried out if another one of the terminal stations TS1, TS3 wants to send data to a receiver.

All data sent by the terminal stations TS1, TS2, TS3 as an uplink transmission is collected by the base station BS and is then forwarded from the base station BS to the central office CO as a downlink transmission. In the first-mentioned transmission, all data has the base station BS as the actual address. In the second-mentioned transmission, all data from the different terminal stations TS1, TS2, TS3 have the same actual address, i.e. the address of the central office CO. From the central office CO, the data is then processed for further transmission within the core network CN.

If, for example, data shall be sent to the terminal station TS3, the data is received from the core network CN by the central office CO. The central office CO transmits the data in an uplink transmission to the base station BS. The actual address being assigned to the data is the address of the base station BS.

Then, the base station examines the data and elaborates which one of the terminal stations TS1, TS2, TS3 is the destination of the data. The address of this terminal station, i.e. the terminal station TS3, is then assigned as the actual address to the data. Then, the data is transmitted in a downlink transmission from the base station BS to all terminal stations TS1, TS2, TS3. Due to the assigned actual address, the respective terminal station TS3 receives and admits the data.

The same procedure is carried out if data shall be sent to another one of the terminal stations TS1, TS3.

All data that shall be sent to one of the terminal stations TS1, TS2, TS3 is transmitted from the central office CO to the base station BS as an uplink transmission and is then distributed by the base station BS to the terminal stations TS1, TS2, TS3 as a downlink transmission. In the first-mentioned transmission, the data for the different terminal stations TS1, TS2, TS3 have the same actual address, i.e. the address of the base station BS. In the second-mentioned transmission, the address of the destination, i.e. the respective terminal station, is assigned to the respective data.

It is now assumed that the base station BS and therefore the point-to-multipoint communication between the base station BS and the terminal stations TS1, TS2, TS3 is carried out according to a time-division-duplex (TDD) method. Then, the uplink and the downlink transmission to and from the base station BS are carried out consecutively with one and the same frequency. The data received by the base station BS from the terminal stations TS1, TS2, TS3 in an uplink transmission is therefore forwarded from the base station BS to the central office CO in a subsequent downlink transmission. It is possible that the data has to be stored in the base station BS in order to bridge the time from the uplink transmission to the downlink transmission.

As the address of the central office CO is assigned as the actual address to the data in the downlink transmission, the terminal stations TS1, TS2, TS3 may receive these data but will not admit these data.

The same is valid for a transmission from the central office CO to one of the terminal stations TS1, TS2, TS3 via the base station BS.

It is now assumed that the base station BS and therefore the point-to-multipoint communication between the base station BS and the terminal stations TS1, TS2, TS3 is carried out according to a frequency-division-duplex (FDD) method. Then, the uplink and the downlink transmission to and from the base station BS are carried out in parallel with two different frequencies. The data received by the base station BS from the terminal stations TS1, TS2, TS3 in an uplink transmission therefore may be forwarded at once from the base station BS to the central office CO in a downlink transmission, without the requirement to store the data.

Again, due to the assigned actual addresses, the correct receivers will always admit the respective data. As the data may be forwarded at once from the uplink transmission to the downlink transmission, no storage is necessary. The same is valid for an opposite transmission.

Due to the fact that all transmissions that are carried out in an uplink direction, are also transmitted in a downlink direction and vice versa, the sum of all uplink transmissions is equal to the sum of all downlink transmissions, even if the uplink and the downlink transmissions ratio of the subscribers varies. This always leads to a symmetrical utilization of the FDD-frequencies.

As described, the communication link between the base station BS and the central office CO is identical to any other communication link between the base station BS and one of the terminal stations TS1, TS2, TS3. Insofar, the same resource, i.e. the point-to-multipoint communication provided by the base station BS is used as the backhaul connection to the core network CN. Therefore, no additional efforts, in particular no additional costs are necessary to establish this backhaul connection.

However, the mentioned communication link between the base station BS and the central office CO may be improved by the following additional measures. A prerequisite of these measures is that the central office CO is located at a fixed location.

It is possible to use a so-called smart antenna within the base station BS. If, then, the base station BS transmits or receives data to or from the central office CO, the base station BS can increase the quality of this communication link by concentrating the beam of the antenna in the known direction of the central office CO. This smart antenna is commonly used within base stations so that it only requires additional control efforts to carry out the described concentration of the beam. Instead of the smart antenna, other directional antennas may also be used.

Alternatively or additionally, it is possible to use a directional antenna within the central office CO that is directed into the known direction of the base station BS. This directional antenna would require additional hardware costs. However, as only one central office CO is present, the costs are low compared to the cost savings by using the point-to-multipoint communication provided by the base station BS as the communication link between the base station BS and the central office CO.

Furthermore, alternatively or additionally, for the communication link between the central office CO and the base station BS, the antennas may be installed with line-of-sight (LOS).

With these measures, it is possible that the central office CO is located at a location that is at a larger distance from the base station BS. In particular, it is possible to locate the central office CO outside of the cell or sector defined by the base station BS.

## Claims

1. A method of operating a communication system, wherein the communication system comprises a base station (BS) and a central office (CO), wherein a point-to-multipoint communication is established between the base station (BS) and a number of terminal stations (TS1, TS2, TS3), and wherein a communication link is established between the base station (BS) and the central office (CO), **characterized in that** the establishment of the communication link between the central office (CO) and the base station (BS) comprises the use of the present point-to-multipoint communication by establishing the central office (CO) as a further subscriber of the base station (BS).

2. The method of claim 1, **characterized in that** the base station (BS) sends data received by the base station (BS) from one of the terminal stations (TS1, TS2, TS3), to the central office (CO) via the point-to-multipoint communication provided by the base station (BS).

3. The method of one of claims 1 or 2, **characterized in that** base station (BS) receives data addressed to one of the terminal stations (TS1, TS2, TS3) from the central office (CO) via the point-to-multipoint communication provided by the base station (BS).

4. A communication system comprising a base station (BS) and a central office (CO), wherein a point-to-multipoint communication is provided between the base station (BS) and a number of terminal stations (TS1, TS2, TS3), and wherein a communication link is provided between the base station (BS) and the central office (CO), **characterized by** means for using the present point-to-multipoint communication to provide the communication link between the central office (CO) and the base station (BS)by establishing the central office (CO) as a further subscriber of the base station (BS).

5. The communication system of claim 4, **characterized in that** the base station (BS) comprises a beam-forming antenna for concentrating the beam of the antenna in the direction of the central office (CO).

6. The communication system of claim 4, **characterized in that** the base station (BS) comprises a directional antenna for concentrating the beam of the antenna in the direction of the central office (CO).

7. The communication system of one of claims 4 to 6, **characterized in that** the central office (CO) comprises a directional antenna being directed in the direction of the base station (BS).

8. The communication system of one of claims 4 to 7, **characterized in that** the central office (CO) is located outside of a cell or sector defined by the point-to-multipoint communication provided by the base station (BS).

9. A base station (BS) for a communication system, wherein a point-to-multipoint communication is provided between the base station (BS) and a number of terminal stations (TS1, TS2, TS3), and wherein a communication link is provided between the base station (BS) and a central office (CO) of the communication system, **characterized by** means for using the present point-to-multipoint communication to provide the communication link between the central office (CO) and the base station (BS)by establishing the central office (CO) as a further subscriber of the base station (BS).

10. The base station (BS) of claim 9, **characterized in that** the base station (BS) comprises a beam-forming antenna for concentrating the beam of the antenna in the direction of the central office (CO).

11. The base station (BS) of claim 9, **characterized in that** the base station (BS) comprises a directional antenna for concentrating the beam of the antenna in the direction of the central office (CO).

## Patentansprüche

1. Ein Verfahren zum Betrieb eines Kommunikationssystems, wobei das Kommunikationssystem eine Basisstation (BS) und eine zentrale Vermittlung (CO) umfasst, wobei eine Punkt-zu-Mehrpunkt-Verbindung zwischen der Basisstation (BS) und einer Reihe von Datenstationen (TS1, TS2, TS3) erstellt wird und wobei eine Kommunikationsverbindung zwischen der Basisstation (BS) und der zentralen Vermittlung (CO) erstellt wird,
**dadurch gekennzeichnet, dass** die Erstellung der Kommunikationsverbindung zwischen der zentralen Vermittlung (CO) und der Basisstation (BS) den Einsatz der vorhandenen Punkt-zu-Mehrpunkt-Verbindung umfasst, indem die zentrale Vermittlung (CO) als weiterer Teilnehmer der Basisstation (BS) eingerichtet wird.

2. Das Verfahren gemäß Anspruch 1, **dadurch gekennzeichnet, dass** die Basisstation (BS) die Daten, die die Basisstation (BS) von einer der Datenstationen (TS1, TS2, TS3) empfangen hat, über die von der Basisstation (BS) bereitgestellte Punkt-zu-Mehrpunkt-Verbindung an die zentrale Vermittlung (CO) sendet.

3. Das Verfahren gemäß einem der Ansprüche 1 oder 2, **dadurch gekennzeichnet, dass** die Basisstation (BS) die Daten, die an eine der Datenstationen (TS1, TS2, TS3) adressiert sind, über die von der Basisstation (BS) bereitgestellte Punkt-zu-Mehrpunkt-Verbindung von der zentralen Vermittlung (CO) empfängt.

4. Ein Kommunikationssystem, das eine Basisstation (BS) und eine zentrale Vermittlung (CO) umfasst, wobei eine Punkt-zu-Mehrpunkt-Verbindung zwischen der Basisstation (BS) und einer Reihe von Datenstationen (TS1, TS2, TS3) bereitgestellt wird und wobei eine Kommunikationsverbindung zwischen der Basisstation (BS) und der zentralen Vermittlung (CO) bereitgestellt wird, **gekennzeichnet durch** Mittel zum Einsatz der vorhandenen Punkt-zu-Mehrpunkt-Verbindung als Kommunikationsverbindung zwischen der zentralen Vermittlung (CO) und der Basisstation (BS) **durch** Einrichtung der zentralen Vermittlung (CO) als weiterer Teilnehmer der Basisstation (BS).

5. Das Kommunikationssystem gemäß Anspruch 4, **dadurch gekennzeichnet, dass** die Basisstation (BS) eine Strahlenbündelungsantenne zur Konzentration des Antennenstrahls in der Richtung der zentralen Vermittlung (CO) umfasst.

6. Das Kommunikationssystem gemäß Anspruch 4, **dadurch gekennzeichnet, dass** die Basisstation (BS) eine Richtungsantenne zur Konzentration des Antennenstrahls in der Richtung der zentralen Vermittlung (CO) umfasst.

7. Das Kommunikationssystem gemäß einem der Ansprüche 4 bis 6, **dadurch gekennzeichnet, dass** die zentrale Vermittlung (CO) eine Richtungsantenne umfasst, die in Richtung der Basisstation (BS) ausgerichtet ist.

8. Das Kommunikationssystem gemäß einem der Ansprüche 4 bis 7, **dadurch gekennzeichnet, dass** die zentrale Vermittlung (CO) außerhalb der Zelle oder des Sektors angeordnet ist, die/der durch die von der Basisstation (BS) bereitgestellte Punkt-zu-Mehrpunkt-Verbindung definiert wird.

9. Eine Basisstation (BS) für ein Kommunikationssystem, wobei eine Punkt-zu-Mehrpunkt-Verbindung zwischen der Basisstation (BS) und einer Reihe von Datenstationen (TS1, TS2, TS3) bereitgestellt wird und wobei eine Kommunikationsverbindung zwischen der Basisstation (BS) und einer zentralen Vermittlung (CO) des Kommunikationssystems bereitgestellt wird, **gekennzeichnet durch** Mittel zum Einsatz der vorhandenen Punkt-zu-Mehrpunkt-Verbindung zur Bereitstellung der Kommunikationsverbindung zwischen der zentralen Vermittlung (CO) und der Basisstation (BS) **durch** Einrichtung der zentralen Vermittlung (CO) als weiterer Teilnehmer der Basisstation (BS).

10. Die Basisstation (BS) gemäß Anspruch 9, **dadurch gekennzeichnet, dass** die Basisstation (BS) eine Strahlenbündelungsantenne zur Konzentration des Antennenstrahls in der Richtung der zentralen Vermittlung (CO) umfasst.

11. Die Basisstation (BS) gemäß Anspruch 9, **dadurch gekennzeichnet, dass** die Basisstation (BS) eine Richtungsantenne zur Konzentration des Antennenstrahls in der Richtung der zentralen Vermittlung (CO) umfasst.

## Revendications

1. Procédé de fonctionnement d'un système de communication, dans lequel le système de communication comprend une station de base (BS) et un central téléphonique (CO), dans lequel une liaison point à multipoint est établie entre la station de base (BS) et un certain nombre de stations terminales (TS1, TS2, TS3), et dans lequel une liaison de communication est établie entre la station de base (BS) et le central téléphonique (CO), **caractérisé en ce que** l'établissement de la liaison de communication entre le central téléphonique (CO) et la station de base (BS) comprend l'utilisation de la liaison point à multipoint présente en établissant le central téléphonique (CO) en tant qu'abonné supplémentaire de la station de base (BS).

2. Procédé selon la revendication 1, **caractérisé en ce que** la station de base (BS) envoie les données reçues par la station de base (BS) en provenance de l'une des stations terminales (TS1, TS2, TS3) au central téléphonique (CO) via la liaison point à multipoint fournie par la station de base (BS).

3. Procédé selon les revendications 1 ou 2, **caractérisé en ce que** la station de base (BS) reçoit les données adressées à l'une des stations terminales (TS1, TS2, TS3) en provenance du central téléphonique (CO) via la liaison point à multipoint fournie par la station de base (BS).

4. Système de communication comprenant une station de base (BS) et un central téléphonique (CO), dans lequel une liaison point à multipoint est prévue entre la station de base (BS) et un certain nombre de stations terminales (TS1, TS2, TS3), et dans lequel une liaison de communication est établie entre la station de base (BS) et le central téléphonique (CO), **caractérisé par** des moyens destinés à utiliser la liaison point à multipoint présente pour produire la liaison de communication entre le central téléphonique (CO) et la station de hase (BS) en établissant le central téléphonique (CO) en tant qu'abonné supplémentaire de la station de base (BS).

5. Système de communication selon la revendication 4, **caractérisé en ce que** la station de base (BS) comprend une antenne formant un faisceau destinée à concentrer le faisceau de l'antenne dans la direction du central téléphonique (CO).

6. Système de communication selon la revendication 4, **caractérisé en ce que** la station de base (BS) comprend une antenne directionnelle destinée à concentrer le faisceau de l'antenne dans la direction du central téléphonique (CO).

7. Système de communication selon l'une des revendications 4 à 6, **caractérisé en ce que** le central téléphonique (CO) comprend une antenne directionnelle dirigée dans la direction de la station de base (BS).

8. Système de communication selon l'une des revendications 4 à 7, **caractérisé en ce que** le central téléphonique (CO) est situé à l'extérieur d'une cellule ou secteur définie par la liaison point à multipoint fournie par la station de base (BS).

9. Station de base (BS) pour un système de communication, dans laquelle liaison point à multipoint est prévue entre la station de base (BS) et un certain nombre de stations terminales (TS1, TS2, TS3), et dans lequel une liaison de communication est prévu entre la station de base (BS) et un central téléphonique (CO) du système de communication, **caractérisée par** des moyens destinés à utiliser la liaison point à multipoint présente pour produire la liaison de communication entre le central téléphonique (CO) et la station de base (BS) en établissant le central téléphonique (CO) en tant qu'abonné supplémentaire de la station de base (BS).

10. Station de base (BS) selon la revendication 9, **caractérisée en ce que** la station de base (BS) comprend une antenne formant un faisceau destinée à concentrer le faisceau de l'antenne dans la direction du central téléphonique (CO).

11. Station de base (BS) selon la revendication 9, **caractérisée en ce que** la station de base (BS) comprend une antenne directionnelle destinée à concentrer le faisceau de l'antenne dans la direction du central téléphonique (CO).
